**Europäisches Patentamt**

**European Patent Office**

**Office européen des brevets**

(11) Publication number: **0 162 884**
**B1**

# EUROPEAN PATENT SPECIFICATION

(45) Date of publication of patent specification: **31.08.88**   (51) Int. Cl.⁴: **A 01 F 12/10**

(21) Application number: **84904185.0**

(22) Date of filing: **21.11.84**

(86) International application number:
**PCT/NO84/00054**

(87) International publication number:
**WO 85/02316 06.06.85 Gazette 85/13**

(54) **A STRAW CONVEYOR DEVICE IN A COMBINE HARVESTER.**

| | |
|---|---|
| (30) Priority: **23.11.83 NO 834291** | (73) Proprietor: **STOKLUND, Sigmund Kaupang N-3080 Holmestrand (NO)** |
| (43) Date of publication of application: **04.12.85 Bulletin 85/49** | (72) Inventor: **STOKLUND, Sigmund Kaupang N-3080 Holmestrand (NO)** |
| (45) Publication of the grant of the patent: **31.08.88 Bulletin 88/35** | |
| (84) Designated Contracting States: **AT BE DE FR GB NL SE** | (74) Representative: **Needle, Jacqueline et al PAGE, WHITE & FARRER 5 Plough Place New Fetter Lane London EC4A 1HY (GB)** |
| (56) References cited: **EP-A-0 061 230 WO-A-82/01805 FR-A-2 154 156 US-A-1 838 451 US-A-2 112 922** | |

Courier Press, Leamington Spa, England.

## Description

The present invention relates to a combine harvester.

FR—A—2154156 and WO—A—82/01805 describe a combine harvester comprising a cutter apparatus, a threshing cylinder, and a straw conveyor device, said straw conveyor device comprising a first conveyor for conveying straw rearwardly and possibly upwardly from said cutter apparatus, and a second conveyor for conveying the straw up to said threshing cylinder, which is situated higher than the exit end of said first conveyor, said second conveyor comprising two cooperating rotors arranged one lower than the other.

According to the present invention, a combine harvester of the type defined is characterised in that said cooperating rotors are each equipped with brushes, and in that the lowermost rotor also forms a rotor of an auxiliary conveyor which is arranged above said first conveyor and cooperates therewith to convey straw rearwardly from the cutter apparatus.

Specific embodiments of the invention are given in Claims 2—6.

A combine harvester of the invention is capable of transporting straw to the threshing cylinder very efficiently and yet is insensitive to stones carried into the harvester with the straw.

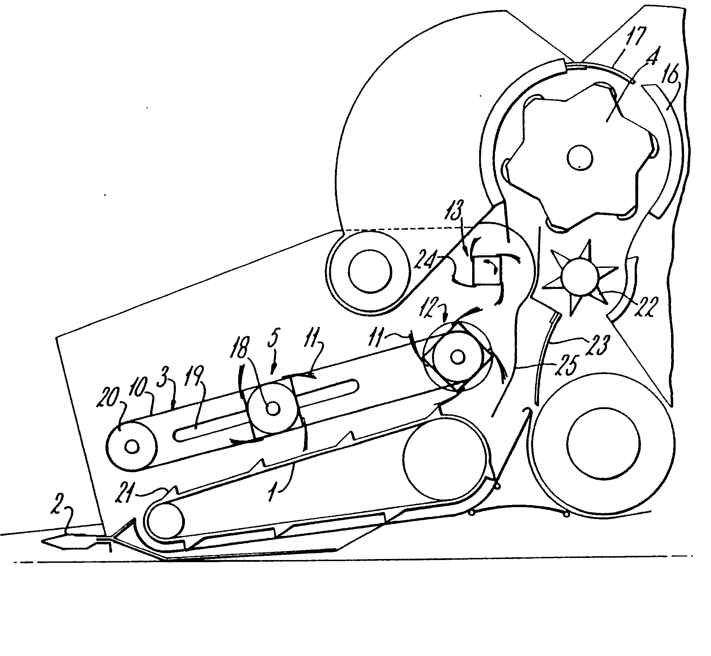

The invention will hereinafter be described, by way of example, with reference to the accompanying drawing in which the Figure shows part of a combine harvester embodying the invention.

The Figure shows the forward end of a combine harvester having a cutter apparatus 2 and a threshing cylinder 4. A first conveyor, in the form of a conveyor belt 1 and an auxiliary conveyor 3 arranged above the conveyor belt 1 cooperate to convey straw rearwardly from the cutter apparatus 2 towards the threshing cylinder 4. The auxiliary conveyor 3 comprises a rotor 5 having a shaft 18 mounted in a slit 19 which extends parallel to the conveyor belt 1. The other end of the shaft 18 is mounted in a corresponding slit. The rotor 5, which is equipped with brushes 11, is driven by an endless drive belt or drive chain 10 which extends around two rotors 12, 20 which are stationarily mounted. One of the rotors 12, 20 is connected to a drive mechanism (not shown). The drive belt or chain 10 either extends to the ends of the rotors 12 and 20 and the rotor 5, or it has a reduced width, so that it does not prevent straw falling down onto conveyor belt 1 after it has been cut by the cutter apparatus 2. In the embodiment illustrated, the conveyor belt 1 is provided with transverse ribs 21. In the Figure, there is also shown a grate 17 and a concave element 16 associated with the threshing cylinder 4, and a drum 22 and a second grate 23. These latter are conventional elements of combine harvesters and are not described further.

The rotor 12 is equipped with brushes 11 thereby forming a conveying rotor and is mounted below a rotor 13 also equipped with brushes 24. The rotor 12 and the rotor 13 are arranged as two cooperating rotors forming a second conveyor for conveying straw up to the threshing cylinder 4.

The rotor 5 is movable relative to the length of the conveyor belt 1, and thus, the position of the rotor 5 may be adjusted to an optimum relative to the straw length to provide efficient transportation of the straw towards the threshing cylinder 4. If a drive chain 10 is used which cooperates with toothed wheels (not shown) on both sides of the rotor 5, the rotor 5 can only be moved after its connection with the chain has been released at least on one side of the rotor 5, for example, by slackening of the chain. This can be achieved by a slight movement of the rotor 20 or the rotor 12. If only one side of the rotor 5 is in engagement with the chain 10, the rotor 5 may be shifted during operation. In this case, the shaft 18 of the rotor 5 may, for example, be connected to hydraulic cylinders for parallel displacement. Such movement could be controlled from the operator's seat in the combine harvester. However, it is not imperative that shifting of the rotor 5 must be possible without manual work, as frequent adjustments during operation are normally not necessary. The shaft 18 may therefore be mounted such that it has to be loosened and shifted manually and substantially refastened manually in the adjusted position.

In operation, the rotor 12 is supplied with straw by the conveyor belt 1 and the rotor 5, and the rotor 12 conveys, by means of its brushes 11, the straw up to the rotor 13. Thereafter the rotor 12 and the rotor 13 cooperate to convey the straw to the threshing cylinder 4, in a very efficient manner because of their brushes 11 and 24. The brushes 11, 24 also have the advantage that they are insensitive to stones in the straw.

In the illustrated embodiment, the first conveyor transporting the straw rearwardly from the cutter apparatus is a conveyor belt 1. Of course, other means may convey the straw rearwardly towards the rotor 12.

The brushes 11 and 24 may, for example, be made of plastics, and polyamide is particularly suitable. The number of brushes provided on each rotor is not critical, and may be more or less than the four illustrated.

Furthermore, more than two cooperating rotors may be provided if required.

At least one of the rotor 12 and the rotor 13 is driven in rotation. Of course, it is possible to drive one or more other rotors by means of only the one driven rotor, as the brushes may partly interfere in each other. However, if it is required to move the brushes of a rotor in a particular manner relative to another cooperating rotor, these rotors may be synchronously driven, for example, by means of a common drive belt or chain. All the rotors may also be driven by a common drive belt or chain.

In order to bring the straw up to the upper rotor, the lower rotor 12 cooperates with a plate 25, which may be curved concentrically to the rotor 12.

It is possible to provide several pairs of cooperating rotors, but normally one pair will be sufficient, provided that the threshing cylinder is not situated too high.

Preferably, the rotors 12, 13 extend over the entire width of the conveyor belt 1.

## Claims

1. A combine harvester comprising a cutter apparatus (2), a threshing cylinder (4), and a straw conveyor device (1, 12, 13), said straw conveyor device comprising a first conveyor (1) for conveying straw rearwardly and possibly upwardly from said cutter apparatus (2), and a second conveyor (12, 13) for conveying the straw up to said threshing cylinder (4), which is situated higher than the exit end of said first conveyor (1), said second conveyor comprising two cooperating rotors (12, 13) arranged one lower than the other, characterised in that said cooperating rotors (12, 13) are each equipped with brushes (11, 24), and in that the lowermost rotor (12) also forms a rotor of an auxiliary conveyor (3) which is arranged above said first conveyor (1) and cooperates therewith to convey straw rearwardly from the cutter apparatus (2).

2. A combine harvester as claimed in Claim 1, wherein said brushes are made of plastics material.

3. A combine harvester as claimed in Claim 2, wherein said brushes are made of polyamide.

4. A combine harvester as claimed in any preceding claim, wherein said cooperating rotors (12, 13) are arranged such that the ends of their brushes move in paths which either are substantially tangential to each other or cross each other.

5. A combine harvester as claimed in any preceding claim, wherein an arcuate plate (25) is positioned adjacent at least said lowermost rotor (12) to assist in the conveying of the straw by the rotor (12).

6. A combine harvester as claimed in Claim 5, wherein said plate (25) is arranged concentrically with its associated rotor (12).

## Patentansprüche

1. Ein Mähdrescher mit einem Schneidwerk (2), einer Dreschtrommel (4) und einem Strohfördergerät (1, 12, 13), wobei das besagte Strohfördergerät einen ersten Förderer (1) zum Fördern des Strohs von dem besagten Schneidwerk (2) nach hinten und möglicherweise aufwärts umfaßt, sowie einen zweiten Förderer (12, 13) zum Fördern des Strohs aufwärts zu der besagten Dreschtrommel (4), der in höherer Lage angeordnet ist als das Austragende des besagten Förderers (1), wobei der besagte zweite Förderer zwei zusammenarbeitende Rotoren (12, 13) umfaßt, von denen der eine in niedrigerer Lage angeordnet ist als der andere, dadurch gekennzeichnet, daß jeder der besagten zusammenarbeitenden Rotoren (12, 13) mit Bürsten (11, 24) versehen ist und der unterste Rotor (12) auch ein Rotor eines Hilfsförderers (3) ist, der oberhalb des besagten Förderers (1) angeordnet ist und mit diesem beim Fördern des Strohs von dem Schneidwerk (2) nach hinten zusammenarbeitet.

2. Ein Mähdrescher im Einklang mit Anspruch 1, bei dem die besagten Bürsten aus Kunststoff bestehen.

3. Ein Mähdrescher im Einklang mit Anspruch 2, bei dem die besagten Bürsten aus Polyamid bestehen.

4. Ein Mähdrescher im Einklang mit einem der vorstehenden Ansprüche, bei dem die besagten zusammenarbeitenden Rotoren (12, 13) so angeordnet sind, daß sich die Enden ihrer Bürsten in Bahnen bewegen, die entweder im wesentlichen tangential zueinander sind oder einander kreuzen.

5. Ein Mähdrescher im Einklang mit einem der vorstehenden Ansprüche, bei dem eine Krummplatte (25) anschließend an mindestens dem besagten untersten Rotor (12) angeordnet ist, um beim Fördern des Strohs durch den Rotor (12) mitzuwirken.

6. Ein Mähdrescher im Einklang mit Anspruch 5, bei dem die Krummplatte (25) an seinen bestimmten Rotor konzentrisch angeordnet ist.

## Revendications

1. Une moissonneuse-batteuse comprenant un appareil de coupe (2), un cylindre batteur (4) et un transporteur de paille (1, 12, 13), ledit transporteur de paille se composant d'une première bande transporteuse (1) visant à acheminer la paille vers l'arrière et peut-être vers le haut à partir de l'appareil de coupe (2), et d'un second dispositif transporteur (12, 13) visant à acheminer la paille vers le haut vers ledit cylindre batteur (4), qui est situé en hauteur par rapport à l'extrémité de décharge de ladite première bande transporteuse (1), ledit second dispositif transporteur comprenant deux rotors concourants (12, 13) disposés l'un sous l'autre, caractérisé par le fait que lesdits rotors concourants (12, 13) sont chacun équipés de brosses (11, 24) et que le rotor du bas (12) forme aussi un rotor pour un dispositif transporteur auxiliaire (3) qui est placé au-dessus de ladite première bande transporteuse (1) et coopère avec celle-ci à l'acheminement de la paille vers l'arrière à partir de l'appareil de coupe (2).

2. Une moissonneuse-batteuse conforme à la revendication 1, où lesdites brosses sont en matériau plastique.

3. Une moissonneuse-batteuse conforme à la revendication 2, où lesdites brosses sont en polyamide.

4. Une moissonneuse-batteuse conforme à toute revendication précédente, où lesdits rotors concourants (12, 13) sont disposés de telle sorte que les extrémités de leurs brosses suivent des trajectoires essentiellement tangentielles ou transversales.

5. Une moissonneuse-batteuse conforme à toute revendication précédente, où une plaque arquée (25) est positionnée à côté au moins dudit rotor inférieur (12) pour contribuer à l'acheminement de la paille par ce rotor (12).

6. Une moissonneuse-batteuse conforme à la revendication 5, où ladite plaque (25) est positionnée concentriquement à son rotor associé.

4